# EUROPÄISCHE PATENTANMELDUNG

(11) **EP 1 881 211 A2**
(43) Veröffentlichungstag der Anmeldung: **23.01.2008**
(21) Anmeldenummer: 07012241.1
(22) Anmeldetag: 22.06.2007
(51) Int. Cl.: F16B 41/00

(54) **Befestigungsvorrichtung aus Schraube und Hülse**

(30) Priorität: 19.07.2006 DE 102006033330
(71) Anmelder: William Prym GmbH & Co. KG, 52224 Stolberg (DE)
(72) Erfinder: Hoven, Helmut, 52223 Stolberg (DE)
(74) Vertreter: Mentzel, Norbert

(57) **Zusammenfassung**

Die Befestigungsvorrichtung (10.1) besteht aus einer Schraube (20), die eine Hülse (30.1) axial durchsetzt und mit dieser unverlierbar verbunden ist. Die Verbindung kommt dadurch zustande, dass im Hülseninneren eine Engstelle (37) vorgesehen ist, die sich in einem schlanken Schaftbereich (22) vor dem endseitigen Gewindebereich (23) im Schaft der Schraube (20) befindet. An der Engstelle (37) entsteht eine reduzierte Restöffnung im Schaftinneren, die kleiner als der Außendurchmesser des Gewindebereichs vom Schaft ausgebildet ist. Zur einfacheren Herstellung wird vorgeschlagen, die Engstelle (37) aus mindestens einem Stift (40.1) auszubilden, der in einer Bohrung der Hülse (30.1) steckt. Dieser Stift (40.1) ist demontierbar und zeichnet die Befestigungsvorrichtung durch eine hohe Ausreißfestigkeit aus, (Fig. 2a).

## Beschreibung

Die Erfindung richtet sich auf eine Befestigungsvorrichtung der im Oberbegriff des Anspruches 1 angegebenen Art. Die Hülse wird hier von einer Schraube axial durchsetzt und bildet aufgrund der im Hülseninneren vorgesehenen Engstelle eine reduzierte Restöffnung, wodurch eine unverlierbare Kombination aus Schraube und Hülse entsteht. Die Engstelle greift an einem schlanken Schaftabschnitt zwischen einem Schraubenkopf und einem verdickten Gewindeabschnitt an.

Die DE 1 812 906 U1 zeigt eine bekannte Befestigungsvorrichtung dieser Art. Dort entsteht die Engstelle durch eine Profilierung in der Wand der Hülse, die im Bereich des schlanken Schaftabschnitts eine reduzierte Öffnung in der Hülse erzeugt. Die Ausreißfestigkeit ist durch die Materialfestigkeit der Hülse bestimmt, was in manchen Anwendungsfällen nicht genügt. Außerdem lässt sich die Schraube aus der Hülse nicht wieder ohne Weiteres lösen, wenn es z.B. darum geht, eine defekte Schraube durch eine neue zu ersetzen.

Die DE 199 24 502 A1 und die EP 0 272 642 B1 zeigen Befestigungsvorrichtungen ähnlicher Art, welche die gleichen Nachteile aufweisen.

Aus der US 3,221,794 A, der DE 100 63 812 A1, der DE 101 59 686 A1 und der DE 100 63 812 B4 ist es bekannt, die Unverlierbarkeit der Schraube durch Verformungen am Ende der Hülse zu erzeugen.

Schließlich gibt es auch Befestigungsvorrichtungen, wo die Unverlierbarkeit durch zusätzliche Einlagen zwischen der Schraube und der Hülse erreicht wird. So ist es aus der DE 195 10 349 C2 bekannt, unter dem Kopf einer Schraube eine Unterlegscheibe zu verwenden, die einen ins Hülseninneren weisenden verengten Kragen aufweist. Diese Unterlegscheibe muss aber von einem Elastomerring festgehalten werden, der um Umfang der Hülse sitzt. Aus der DE 199 24 502 C2 ist eine Befestigungsvorrichtung bekannt, wo die Unterlegscheibe mit der Hülse festgeschweißt wird und dadurch ein Elastomerring entbehrlich ist. Die Schweißung ist aber arbeits- und kostenintensiv.

Der Erfindung liegt die Aufgabe zugrunde, eine ausreißsichere Befestigungsvorrichtung der im Oberbegriff des Anspruches 1 genannten Art zu entwickeln, die bedarfsweise eine Demontage der Schraube gegenüber der Hülse erlaubt. Dies wird durch die im Anspruch 1 angeführten Maßnahmen erreicht, denen folgende besondere Bedeutung zukommt.

Bei der Erfindung entsteht die Engstelle durch mindestens einen Stift, der in eine Bohrung der Hülse eingesteckt und dort fixiert wird. Der Stift ragt bereichsweise ins Hülseninnere und reduziert den Hülsenquerschnitt auf eine Restöffnung, die kleiner als der Außendurchmesser des Gewindestifts ausgebildet ist. Die Demontage einer solchen Befestigungsvorrichtung ist bedarfsweise durch Herausziehen des Stiftes aus der Bohrung möglich. Die Ausreißfestigkeit kann gesteigert werden, wenn der Stift aus einem gegenüber der Hülse festeren Material, z.B. Stahl, gebildet ist. Als Stift kann man einen Spannstift, einen Spiralstift oder einen Stift mit Vollquerschnitt verwenden.

Man setzt die Bohrung in der Hülse so, dass, gemäß Anspruch 2, der Stift in einer Radialebene der Hülse verläuft. Es gibt grundsätzlich zwei Arten, den Stift in der Hülse zu platzieren. Eine Möglichkeit ist in Anspruch 3 angeführt. Eine andere Möglichkeit ist in Anspruch 4 und/oder 5 angegeben. Jeder dieser beiden Möglichkeiten kommt eine eigenständige erfinderische Bedeutung zu.

Weitere Maßnahmen und Vorteile der Erfindung ergeben sich aus den Unteransprüchen, der nachfolgenden Beschreibung und den Zeichnungen. In den Zeichnungen ist die Erfindung in zwei Ausführungsbeispielen dargestellt. Es zeigen:
- Fig. 1a, 1b,: in einem Längsschnitt zwei Varianten einer konkreten Anwendung der erfindungsgemäßen Befestigungsvorrichtung,
- Fig. 2a, 2b: die beiden Befestigungsvorrichtungen von Fig. 1a und 1b vor ihrer Anwendung,
- Fig. 3a: eine Vergrößerung des in Fig. 2a mit IIIa gekennzeichneten mittleren Bereichs,
- Fig. 4a: einen Querschnitt durch die in Fig. 3a gezeigte Vergrößerung längs der dortigen Schnittlinie IVa - IVa,

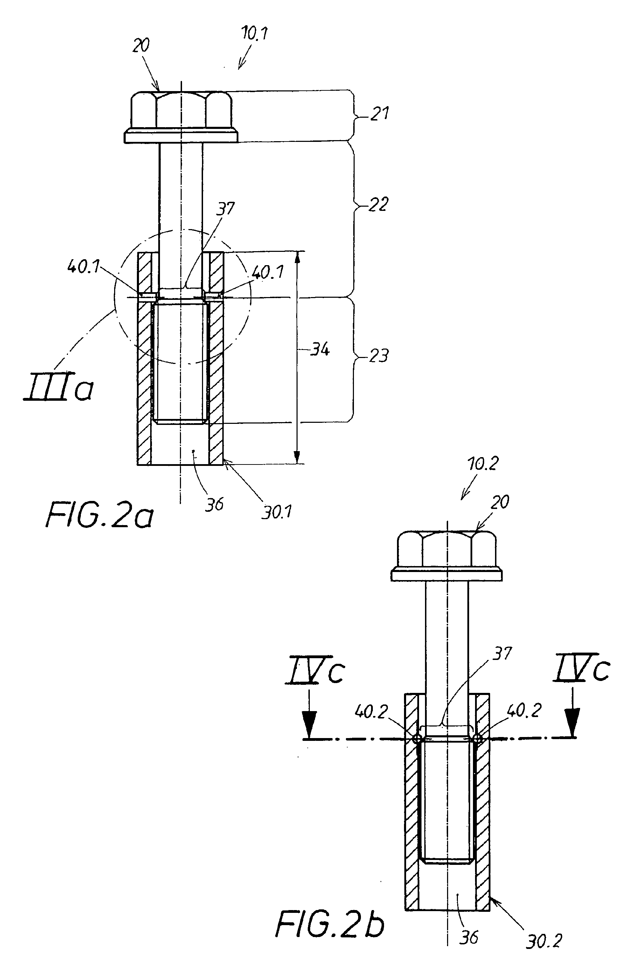

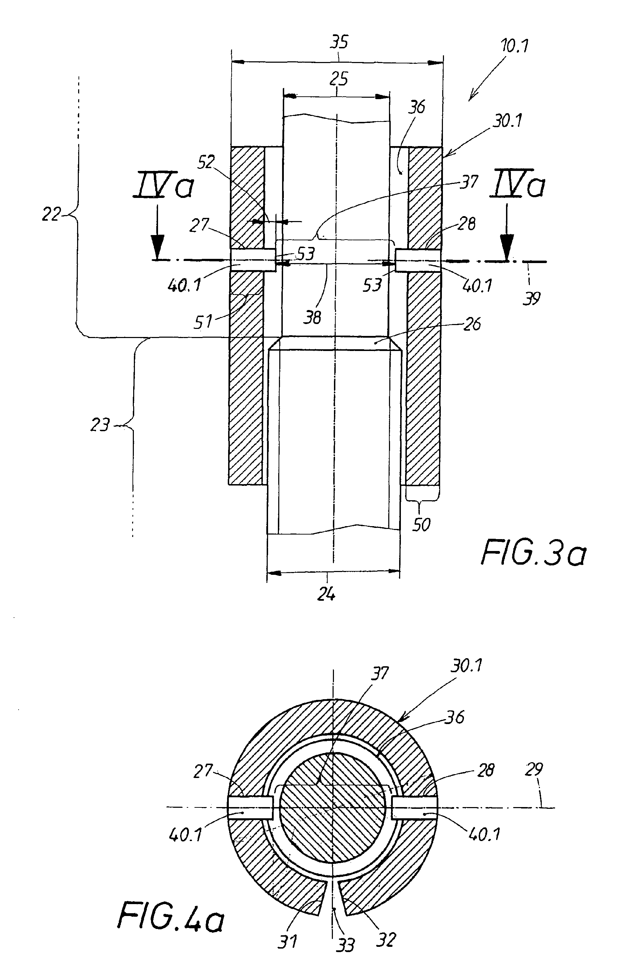

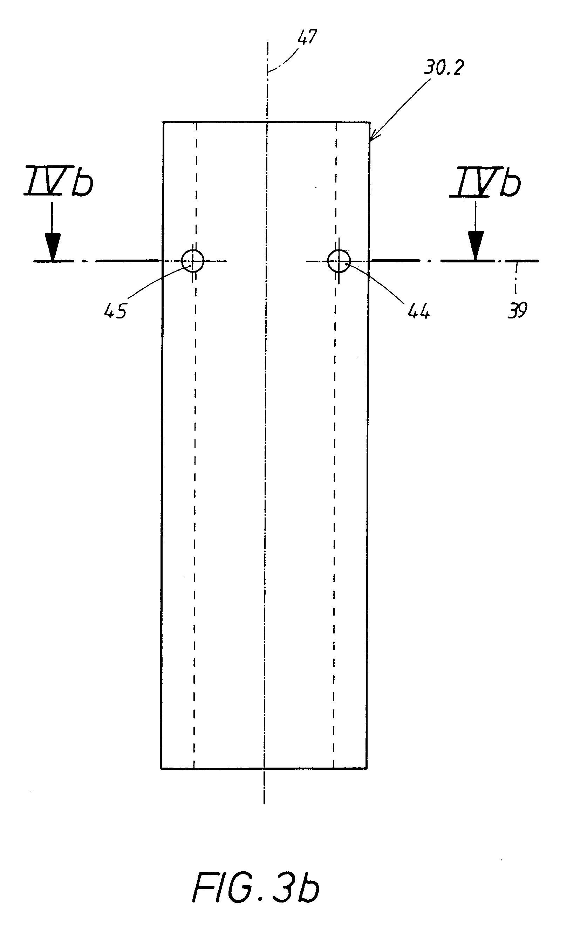

- Fig. 3b: in einer zu Fig. 3a analogen Vergrößerung eine Hülse der Befestigungsvorrichtung von Fig. 2b,

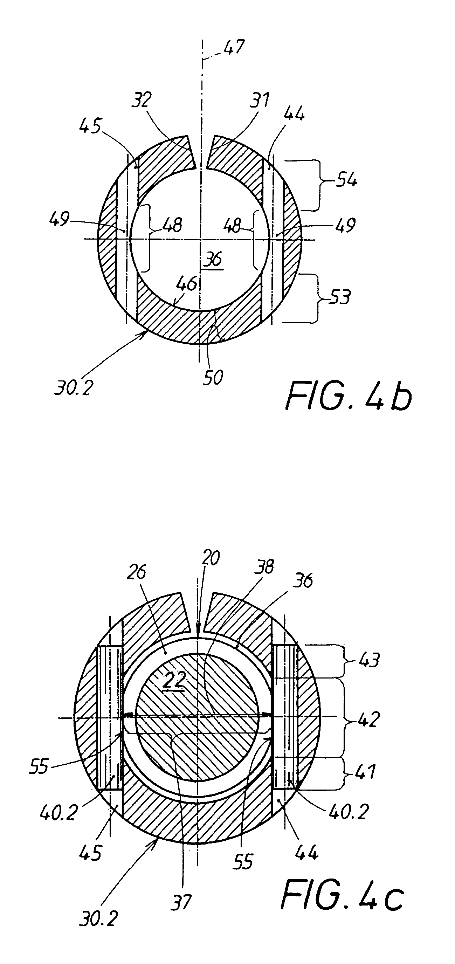

- Fig. 4b,: in Analogie zu Fig. 4a einen Querschnitt durch die in Fig. 3b gezeigte Hülse längs der Schnittlinie IVb - IVb und
- Fig. 4c,: in Vergrößerung, einen Querschnitt durch die zweite Ausführung der erfindungsgemäßen Vorrichtung längs der Schnittlinie IVc - IVc, nachdem die Hülse in der Querschnittsdarstellung von Fig. 4b mit zwei Stiften versehen worden ist.

Wie bereits gesagt, zeigen die Fig. 2a, 2b zwei Ausführungsbeispiele von Befestigungsvorrichtungen 10.1, 10.2 nach der Erfindung. Beide Vorrichtungen haben einen weitgehend übereinstimmenden Aufbau; sie bestehen aus drei Elementen, nämlich einer Schraube 20, einer Hülse 30.1, 30.2 und zwei Stiften 40.1, 40.2. Die beiden Vorrichtungen 10.1, 10.2 unterscheiden sich lediglich durch die Anordnung der beiden Stifte 40. Übereinstimmend zueinander sind die Schrauben 20 in den beiden Vorrichtungen 10.1, 10.2 ausgebildet, weshalb sie gemeinsam beschrieben werden können.

Ausweislich der Fig. 2a umfasst die Schraube 20 einen Kopf 21 und einen in zwei unterschiedliche Bereiche 22, 23 gegliederten Schaft. Es gibt einen endseitigen Gewindebereich 23, der, wie Fig. 3a erkennen lässt, einen definierten Außendurchmesser 24 aufweist. Zwischen dem Kopf 21 und dem Gewindebereich 23 gibt es einen gewindefreien schlanken Schaftbereich 22, der gemäß Fig. 3a einen kleineren Außendurchmesser 25 besitzt.

Sieht man von der vorerwähnten unterschiedlichen Anordnung der Stifte 40.1, 40.2 ab, so hat auch die Hülse 30.1, 30.2 bei beiden Vorrichtungen 10.1, 10.2 einen weitgehend übereinstimmenden Aufbau. Wie am besten aus Fig. 4a und 4b zu ersehen ist, wird die Hülse zunächst als Stanzprodukt aus einem Blech hergestellt. Nach dem Ausstanzen wird der Blechabschnitt zu dem Ringquerschnitt von Fig. 4a, 4b verformt, wobei die beiden Enden 31, 32 des Stanzprodukts gegeneinander weisen. So entsteht in der fertigen Hülse 30.1, 30.2 ein Längsspalt 33, der normalerweise nicht geschlossen ist.

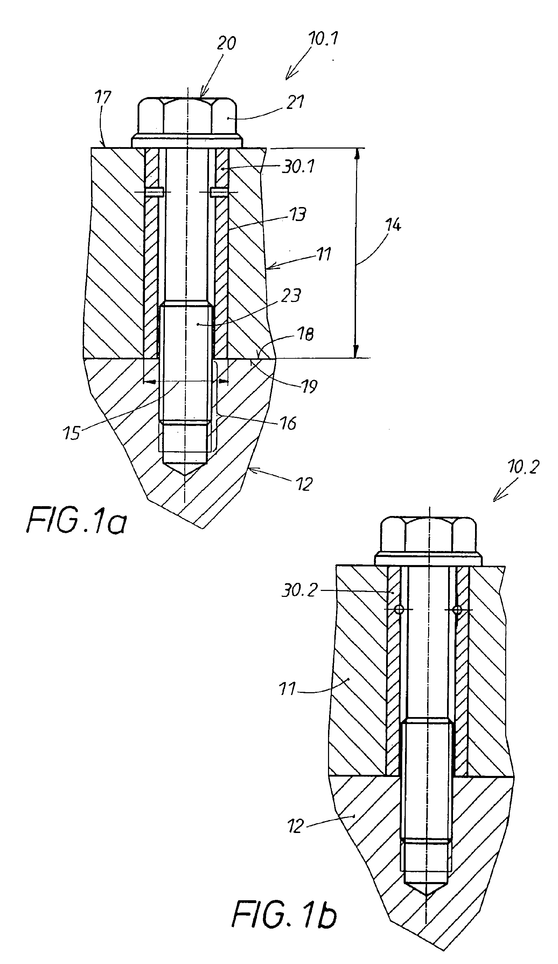

Wie bereits erwähnt wurde, besteht die Aufgabe einer solchen Befestigungsvorrichtung 10.1, 10.2 darin, zwei z.B. aus Fig. 1a bzw. 1b ersichtliche Bauteile 11, 12 aneinander zu befestigen. Der eine Bauteil 11 hat einen Durchbruch 13, um im Gebrauchsfall die Hülse 30.1 bzw. 30.2 aufnehmen zu können. Zweckmäßigerweise wird dabei die aus Fig. 2a ersichtliche Hülsenlänge 34 der Dicke des ersten Bauteils 11 angepasst. Der Durchbruch 13 besitzt einen lichten Querschnitt 15, der dem Umfangsquerschnitt 35 der Hülse 30.1 angepasst ist. Der zweite Bauteil 12 hat eine sacklochartige Gewindebohrung 16, in welcher der vorerwähnte Gewindebereich 23 der Schraube 20 im Gebrauchsfall einschraubbar ist. Nach der Befestigung stützt sich der Schrauben-Kopf 21 an der Oberseite 17 des ersten Bauteils 11 ab. Beim Festziehen der Schraube 20 wird der erste Bauteil 11 mit seiner Unterseite 11 gegen die Frontfläche 19 des zweiten Bauteils 12 angepresst.

Wie bereits erwähnt wurde, zeichnen sich die Befestigungsvorrichtungen 10.1, 10.2 dadurch aus, dass die Schraube 20 mit der Hülse 30.1 bzw. 30.2 eine unverlierbare Kombination bildet. Das erleichtert die Handhabe beim Zusammenbau und bei der Montage der beiden Bauteile 11, 12. Dies geschieht in übereinstimmender Weise bei beiden Vorrichtungen 10.1, 10.2 dadurch, dass die jeweiligen Stifte 40.1 bzw. 40.2 im Hülseninneren 36 eine aus Fig. 2a, 2b ersichtliche Engstelle 37 aufweisen. Ausweislich der Fig. 3a und 4c verbleibt an der Engstelle 37 der beiden Vorrichtungen 10.1 bzw. 10.2 eine Restöffnung 38, die in jedem Fall kleiner als der vorerwähnte, aus Fig. 3a ersichtliche Außendurchmesser 24 des Schrauben-Gewindebereichs 23 ausgebildet ist. Dann verhindert ein aus Fig. 3a ersichtlicher Absatz 26 zwischen dem Schaftbereich 22 und dem Gewindebereich 23 der Schraube 20, dass die Schraube 20 aus der zugehörigen Hülse 30.1 bzw. 30.2 herausgezogen werden kann.

Diese Engstellen 37 entstehen bei den beiden Vorrichtungen 10.1, 10.2 zwar stets durch zwei Stifte 40.1, 40.2, doch sind diese, wie bereits erwähnt wurde, zueinander unterschiedlich positioniert, wobei jeder der beiden Varianten eine eigene erfinderische Bedeutung zukommt. Eine Übereinstimmung besteht in beiden Fällen darin, dass die Stifte 40.1, 40.2 in der gleichen Radialebene 39 verlaufen, wie anhand der Fig. 3a und 3b zu erkennen ist.

Die Lage der Stifte 40.1 der ersten Befestigungsvorrichtung 10.1 lässt sich am besten anhand der Fig. 3a und 4a beschreiben. In Höhe der Radialebene 39 ist die Hülse 30.1 mit zwei radialen Bohrungen 27, 28 versehen, die im vorliegenden Fall zueinander diametral angeordnet sind, also in einer gemeinsamen, strichpunktiert in Fig. 4a verdeutlichten Axialebene 29 liegen. In diese Bohrungen 27, 28 werden, wie gesagt, zwei Stifte 40.1 eingesteckt, die mit einem äußeren Schaftabschnitt 51 in der Hülsenwand 50 festsitzen. Ein innerer Abschnitt 52 des Stiftes 52 ragt ins Hülseninnere hinein. Zwischen den beiden Stirnenden 53 der beiden eingesteckten Stifte 40.1 entsteht die geschilderte Restöffnung 38 der Engstelle 37.

Es versteht sich, dass anstelle von zwei Stiften 40.1 nur einer in der geschilderten Weise bereits zur Ausbildung einer Engstelle 37 reicht. Anstelle von zwei Stiften 40.1 könnten auch mehrere, z.B. drei angeordnet sein. Der radiale Verlauf der Bohrungen 27, 28 bei dieser Vorrichtung 10.1 ist zwar optimal, doch würde sich eine Engstelle 37 auch dann ergeben, wenn solche Bohrungen geneigt in der Hülsenwand 50 verlaufen würden.

Die abweichende Ausbildung der zweiten Ausführungsform 10.2 der Vorrichtung lässt sich am besten anhand der Fig. 3b und 4b beschreiben. Auch bei der Hülse 30.2 sind zwei Bohrungen 44, 45 vorgesehen, die allerdings, bezogen auf den Innenkreis 46 des Hülseninneren 36, tangential verlaufen. Die beiden Bohrungen 44, 45 verlaufen sogar zueinander parallel und sind spiegelbildlich bezüglich der strichpunktiert in Fig. 4b angeordneten Symmetrieebene 47 angeordnet. Ein in Fig. 4b mit 48 gekennzeichnetes Mittelstück der Bohrungen 44, 45 erzeugt einen zum Hülseninneren 36 offenen Innenkanal 49, dem besondere Bedeutung zukommt, wie aus Fig. 4c zu ersehen ist.

In Fig. 4c sind die beiden Stifte 40.2 in den Bohrungen 44, 45 eingesteckt und lassen sich in drei Abschnitte 41 bis 43 gliedern. In dem aus Fig. 4b ersichtlichen Mittelstück 48 der Hülse 30.2 kommen die beiden Stifte 40.2 mit einem Mittelabschnitt 42 zu liegen. Die Stift-Mittelabschnitte 42 liegen dabei vollflächig am Innenkanal 46 der beiden Bohrungen 44, 45 an. Beidseits des Stift-Mittelabschnitts 42 befinden sich Endabschnitte 41, 43, die in zwei Endabschnitte 54, 55 der beiden Bohrungen 44, 45 aufgenommen sind, wie aus Fig. 4b zu entnehmen ist. Diese Endabschnitte 54, 55 sind Vollbohrungen. Gemäß Fig. 4c liegen die beiden Mittelabschnitte 42 der Stifte 40.2 zum Hülseninneren 36 hin frei und umgreifen den in Fig. 4c geschnitten dargestellten Schaftbereich 22 zwischen dem aus Fig. 2a ersichtlichen Schraubenkopf 21 und dem Gewinde-Bereich 23. Zwischen dem in Fig. 4c mit 55 gekennzeichneten Umfangszone der Mittelabschnitte 42 entsteht die bereits beschriebene Engstelle 37 der beiden Stifte 40.2.

Die in beiden Vorrichtungen 10.1, 10.2 beschriebenen Bohrungen 27, 28 einerseits und 44, 45 andererseits können bereits während des oben beschriebenen Stanzvorgangs bei der Herstellung der zugehörigen Hülse 30.1, 30.2 eingebracht werden. Eine andere Möglichkeit, die Ihre eigene Vorteile hat, besteht darin, diese Bohrungen nach dem Stanzen, insbesondere nach dem Ausbilden des Ringprofils in der Hülse 30.1, 30.2 einzuarbeiten.

### Bezugszeichenliste :

- 10.1: Befestigungsvorrichtung (Fig. 2a)
- 10.2: Befestigungsvorrichtung (Fig. 2b)
- 11: erster Bauteil (Fig. 1a, 1b)
- 12: zweiter Bauteil (Fig. 1a, 1b)
- 13: Durchbruch (Fig. 1a)
- 14: Dicke von 11 (Fig. 1a)
- 15: lichter Querschnitt von 13 (Fig. 1a)
- 16: Gewindebohrung in 12 (Fig. 1a)
- 17: Oberseite von 11 (Fig. 1a)
- 18: Unterseite von 11 (Fig. 1a)
- 19: Frontfläche von 12 (Fig. 1a)
- 20: Schraube
- 21: Kopf von 20
- 22: Schaft, gewindefreier Schaftbereich von 20 (Fig. 3a)
- 23: Schaft, Gewindebereich von 20 (Fig. 3a)
- 24: Außendurchmesser von 23 (Fig. 3a)
- 25: Außendurchmesser von 22 (Fig. 3a)
- 26: Absatz zwischen 22, 23 (Fig. 3a, 4c)
- 27: erste Bohrung in 30.1 (Fig. 3a, 4a)
- 28: zweite Bohrung in 30.1 (Fig. 3a, 4a)
- 29: Axialebene von 30.1 für 27, 28 (Fig. 4a)
- 30.1: Hülse von 10.1
- 30.2: Hülse von 10.2
- 31: erstes Ende von 30.1 (Fig. 4a)
- 32: zweites Ende von 30.1 (Fig. 4a)
- 33: Längsspalt zwischen 31, 32 (Fig. 4a)
- 34: Hülsenlänge von 30.1 (Fig. 2a)
- 35: Umfangsquerschnitt von 30.1 (Fig. 3a)
- 36: Hülseninneres von 30.1, 30.2
- 37: Engstelle in 36 (Fig. 2a, 2b; 3a; 4a, 4c)
- 38: Restöffnung bei 37 (Fig. 4b, 4c)
- 39: Radialebene von 30.1, 30.2 (Fig. 3a, 3b)
- 40.1: Stift für 10.1
- 40.2: Stift für 10.2
- 41: erster Endabschnitt von 40.2 (Fig. 4c)
- 42: Mittelabschnitt von 40.2 (Fig. 4c)
- 43: zweiter Endabschnitt von 40.2 (Fig. 4c)
- 44: erste Bohrung in 30.2 (Fig. 3b, 4b)
- 45: zweite Bohrung in 30.2 (Fig. 3b, 4b)
- 46: Innenkreis von 36 (Fig. 4b)
- 47: Symmetrieebene von 30.2 (Fig. 3b, 4b)
- 48: Mittelstück von 44, 45 (Fig. 4b)
- 49: Innenkanal bei 48 (Fig. 4b)
- 50: Hülsenwand von 30.1, 30.2 (Fig. 3a, 4b)
- 51: äußerer Abschnitt von 40.1 (Fig. 3a)
- 52: innerer Abschnitt von 40.1 (Fig. 3a)
- 53: Endstück von 44, 45, Vollbohrung (Fig. 4b)
- 54: Endstück von 44, 45, Vollbohrung (Fig. 4b)
- 55: Umfangszone von 40.2 bei 42 (Fig. 4c)

## Patentansprüche

1. Befestigungsvorrichtung (10.1; 10.2), bestehend aus einer unverlierbaren Kombination einer Schraube (20) mit einer Hülse (30.1; 30.2), die von der Schraube (20) axial durchsetzt wird,
wobei die Schraube (20) einen gewindefreien schlanken Schaftbereich (22) mit einem gegenüber dem endseitigen Gewindebereich (23) kleineren Durchmesser (25) aufweist,
und die Hülse (30.1; 30.2) im Hülseninneren (36) eine Engstelle (37) besitzt, die eine reduzierte Restöffnung (38) erzeugt,
und die Restöffnung (38) kleiner als der Außendurchmesser (24) des Gewindebereichs (23) vom Schaft ausgebildet ist,
**dadurch gekennzeichnet ,**
**dass** die Engstelle (37) aus mindestens einem Stift (40.1; 40.2) besteht, der in einer Bohrung (27, 28; 44, 45) der Hülse (30.1; 30.2) eingesteckt ist.

2. Vorrichtung (10.1; 10.2) nach Anspruch 1, **dadurch gekennzeichnet, dass** der Stift (40.1; 40.2) in einer Radialebene (39) der Hülse (30.1; 30.2) angeordnet ist.

3. Vorrichtung (10.1) nach Anspruch 1 oder 2, **dadurch gekennzeichnet, dass** die Bohrung (27, 28) radial in der Hülse (30.1) verläuft
und dass ein innerer Abschnitt (52) des eingesteckten Stifts (40.1) ins Hülseninnere (36) hineinragt und die Engstelle (37) bildet.

4. Vorrichtung (10.2) nach Anspruch 1 oder 2, **dadurch gekennzeichnet, dass** die Bohrung (44, 45) in der Hülse (30.2) tangential verläuft,
dass ein Mittelabschnitt (42) des eingesteckten Stifts (40.2) das Hülseninnere (36) durchsetzt und
dass eine Umfangszone (52) vom Mittelabschnitt (42) die Engstelle (37) im Hülseninneren (36) erzeugt.

5. Vorrichtung (10.2) nach Anspruch 4, **dadurch gekennzeichnet, dass** ein Mittelstück (48) der Bohrung (44, 45) einen zum Hülseninneren (36) hin offenen Innenkanal (49) erzeugt,
während die beiden, das Mittelstück (48) beidseitig begrenzenden Endstücke (53, 54) der Bohrung (44, 45) Vollbohrungen sind, die zur Aufnahme der beiden Stift-Endabschnitte (41, 43) dienen,
und dass der Mittelabschnitt (42) des Stifts (40.2) im Innenkanal (49) der Hülse (30.2) aufgenommen ist.

6. Vorrichtung (10.1; 10.2) nach einem der Ansprüche 1 bis 5, **dadurch gekennzeichnet, dass** zwei Stifte (40.1; 40.2) an zwei zueinander gegenüberliegenden Stellen der Hülse (30.1; 30.2) angeordnet sind
und dass die beiden Stifte (40.1; 40.2) den schlanken Schaftbereich (22) der Schraube (20) zwischen sich fassen.

7. Vorrichtung (10.1) nach Anspruch 3 und 6, **dadurch gekennzeichnet, dass** die beiden eingesteckten Stifte (40.1) im Wesentlichen miteinander diametral (29) ausgerichtet sind
und dass die inneren Endabschnitte (42) der beiden Stifte (40.1) gegeneinander weisen und die verengte Restöffnung (38) im Hülseninneren (36) erzeugen.

8. Vorrichtung (10.2) nach Anspruch 4 oder 5 und 6, **dadurch gekennzeichnet, dass** die beiden eingesteckten Stifte (40.2) im Wesentlichen zueinander parallel verlaufen
und dass Bereiche der Umfangszonen (55) vom Mittelabschnitt (42) der beiden eingesteckten Stifte (40.2) einander zugekehrt sind und zwischen sich die reduzierte Restöffnung (38) im Hülseninneren (36) erzeugen.

9. Vorrichtung (10.1; 10.2) nach einem der Ansprüche 1 bis 8, **dadurch gekennzeichnet, dass** der Stift (40.1; 40.2) ein Spannstift ist.

10. Vorrichtung (10.1; 10.2) nach einem der Ansprüche 1 bis 8, **dadurch gekennzeichnet, dass** der Stift (40.1; 40.2) ein Spiralstift ist.

11. Vorrichtung (10.1; 10.2) nach einem der Ansprüche 1 bis 8, **dadurch gekennzeichnet, dass** der Stift (40.1; 40.2) ein Vollprofil aufweist.

12. Vorrichtung (10.1; 10.2) nach einem der Ansprüche 1 bis 11, **dadurch gekennzeichnet, dass** die Hülse (30.1; 30.2) aus einem Stanzprodukt besteht, welches nach seiner Stanzung zu einem Ringquerschnitt der Hülse (30.1; 30.2) verformt wird
und dass die Bohrung bzw. die Bohrungen (27, 28; 44, 45) für den Stift (40.1; 40.2) bzw. die Stifte bereits während des Stanzvorgangs in das Stanzprodukt eingebracht werden.

13. Vorrichtung nach einem der Ansprüche 1 bis 11, **dadurch gekennzeichnet, dass** die Bohrung bzw. die Bohrungen (27, 278; 44, 45) nach dem Stanzen oder nach dem Ringprofil-Formen des Stanzprodukts zur Hülse (30.1; 30.2) eingebracht werden.
